# EUROPÄISCHE PATENTSCHRIFT

(11) **EP 0 432 129 B1**
(45) Veröffentlichungstag und Bekanntmachung des Hinweises auf die Patenterteilung: **21.09.1994**
(21) Anmeldenummer: 90890313.1
(22) Anmeldetag: 03.12.1990
(51) Int. Cl.: E04H 6/24

(54) **Abstellvorrichtung für Lasten, insbesondere Garagierungsvorrichtung für Fahrzeuge**
Goods storing device, in particular car garaging device
Dispositif de magasinage de charges, en particulier dispositif de garage pour voitures

(30) Priorität: 04.12.1989 AT 2762/89
(43) Veröffentlichungstag der Anmeldung: 12.06.1991
(73) Patentinhaber: Liebe-Herzing, Fritz, Dr., A-1050 Wien (AT)
(72) Erfinder: Liebe-Herzing, Fritz, Dr., A-1050 Wien (AT)
(74) Vertreter: Holzer, Walter, Dipl.-Ing.

(56) Entgegenhaltungen:
- EP-A- 0 253 775
- CH-A- 440 663
- DE-A- 2 404 057
- FR-A- 1 287 189

## Beschreibung

Die Erfindung betrifft eine Abstellvorrichtung für Lasten, insbesondere Garagierungsvorrichtung für Fahrzeuge, mit zumindest zwei vertikalen Reihen von übereinander angeordneten Stellplätzen und mit einer verfahrbaren, turmartigen Einrichtung zum Anheben und Absenken der Lasten zu bzw. von den Stellplätzen, wobei diese Einrichtung einen höhenverstellbaren Heberahmen mit auf gegenüberliegenden Seiten desselben angeordneten Laufflächen zum Abstützen je einer fahrbaren Aufnahme für eine Last aufweist, und wobei zwischen den Laufflächen des Heberahmens endlos umlaufende Antriebseinrichtungen zum Verfahren der Aufnahmen zwischen Stellplätzen und Heberahmen vorgesehen sind, wobei an den beiden anderen gegenüberliegenden Seiten des Heberahmens mittels der Antriebseinrichtungen ausfahrbare Greiforgane zum Überführen der Aufnahmen von den Stellplätzen auf den Heberahmen vorgesehen sind und die Antriebseinrichtungen mit innerhalb des Heberahmens bewegbaren Mitnehmern zum Überführen der Aufnahmen vom Heberahmen auf die Stellplätze ausgestattet sind.

Eine derartige Garagierungsvorrichtung ist z.B. aus der CH-B 440 663 bekannt. Bei dieser bekannten Vorrichtung werden die Fahrzeugaufnahmen (Paletten) an ihrer Unterseite kraftschlüssig von Reibrädern des Heberahmens beaufschlagt, um die Paletten zwischen Heberahmen und Stellplätzen zu verfahren.

Die Reibräder werden von Elektromotoren über Endlosketten angetrieben und sind zu Reibradsätzen zusammengefaßt, die fest oder verschwenkbar am Heberahmen gelagert sind, um bedarfsweise den Spalt zwischen Heberahmen und angrenzendem Stellplatz zu überbrücken. Zum Verschwenken der beweglichen Reibradsätze sind eigene Elektro-Zylinder/Kolben-Antriebe erforderlich.

Bei einer anderen, aus der DE-A-24 04 057 bekannten Vorrichtung sind die Aufnahmen für die abzustellenden Fahrzeuge durch auf Schienen laufende Paletten gebildet, die auf den Boden des Heberahmens und in die Stellplätze verfahrbar sind. Zum Verfahren der Paletten sind auf dem Heberahmen Rollen angeordnet und es ist ferner ein nicht näher lokalisierter Ketten- oder Zahnradantrieb vorgesehen. Zur Feineinstellung der Paletten auf dem Heberahmen dient ein Hydraulikzylinder.

Diese bekannten Ausführungen sind in konstruktiver Hinsicht aufwendig und damit auch kostspielig, weil unterschiedlich ausgebildete und angeordnete mechanisch/hydraulische Einrichtungen zum Bewegen der Paletten auf den bzw. von dem Heberahmen sowie zum Einstellen der Paletten auf dem Heberahmen vorgesehen werden müssen.

Die Erfindung zielt darauf ab, eine automatisierbare Vorrichtung der einleitend angegebenen Art zu schaffen, die konstruktiv einfache Ausbildung hat, leicht zu warten und zu steuern ist und mit welcher die fahrbaren Aufnahmen mit großer Genauigkeit zugleich auf den Heberahmen bzw. von diesem in die Stellplätze befördert sowie auf dem Heberahmen selbst hin- und herbewegt werden können. Die erfindungsgemäße Vorrichtung zeichnet sich dadurch aus, daß die Greiforgane mittels Kurbeln mit den endlos umlaufenden Antriebsvorrichtungen in Verbindung stehen und daß mindestens zwei Mitnehmer vorgesehen sind, wobei der gegenseitige Abstand der Mitnehmer so getroffen ist, daß der in der Überstellrichtung jeweils vordere Mitnehmer an der Vorderkante der Aufnahme angreift und diese auf den Stellplatz schiebt, wogegen der nachfolgende Mitnehmer an der Aufnahme von hinten angreift und diese vollends auf den Stellplatz schiebt. Dieser formschlüssige Antrieb der Fahrzeugaufnahmen durch translatorisch wirkende Greiforgane und Mitnehmer ermöglicht im Vergleich zu den bisherigen Reibrad- oder Zahnradantrieben einen wesentlich einfacheren Aufbau bei gleichzeitig ausgezeichneter Positioniergenauigkeit.

Gemäß einer bevorzugten Ausführungsform der Erfindung sind die Greiforgane als Greifhaken ausgebildet und über die Kurbeln mittels innerhalb des Heberahmens umlaufender Antriebsketten gegensinnig antreibbar. Nach einem weiteren Merkmal der Erfindung tragen die umlaufenden Antriebsketten für die Greifhaken zugleich die Mitnehmer, die durch von den Ketten mit gegenseitigem Abstand abstehende Mitnehmerrollen für die Aufnahmen gebildet sind. Mit diesen Greifhaken und Mitnehmerrollen kann die jeweilige Aufnahme mit großer Genauigkeit vom Stellplatz auf den Heberahmen gezogen bzw. auf diesen geschoben werden. Die erfindungsgemäße Vorrichtung ist leicht steuerbar bzw. automatisierbar. Zweckmäßig weisen die Laufflächen des Heberahmens Mulden für die Räder der fahrbaren Aufnahmen auf.

Die erfindungsgemäße Vorrichtung kann beispielsweise als Garage aus Fertigteilen in kurzer Zeit an beliebigen Plätzen errichtet sowie jederzeit verlegt werden. Die Einrichtung zum Anheben und Absenken der Aufnahmen ist konstruktiv einfach, damit wenig störungsanfällig und zu Wartungszwecken gut zugänglich.

Die Erfindung wird nachfolgend an einem Ausführungsbeispiel unter Bezugnahme auf die schematischen Zeichnungen näher erläutert. Es zeigen:
Die Fig. 1a und 1b bzw. 2a und 2b je eine schematische Ansicht bzw. Draufsicht einer Garagierungsvorrichtung gemäß der Erfindung,

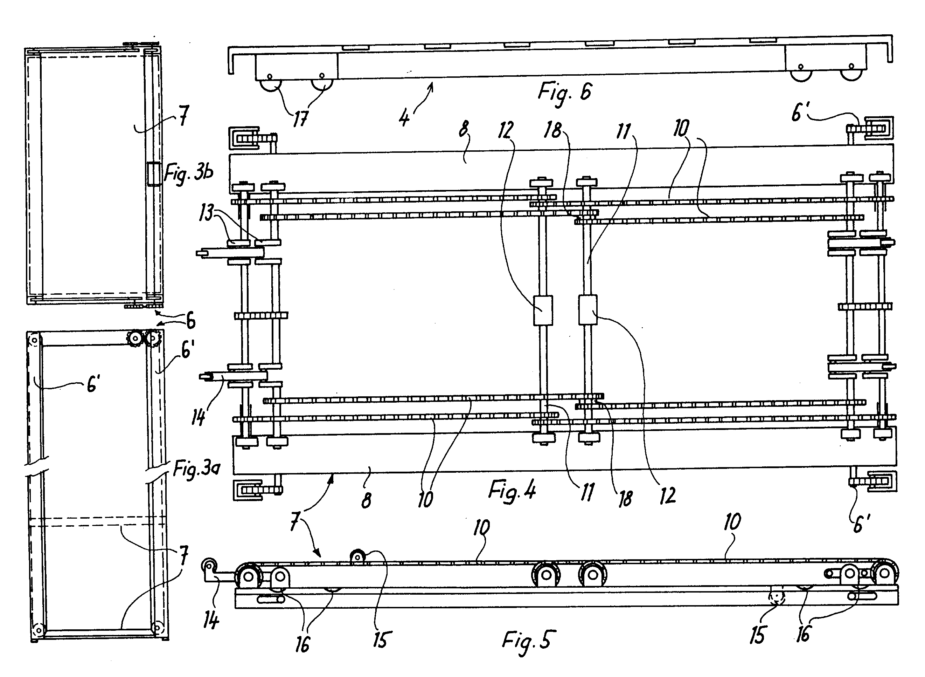

die Fig. 3a und 3b eine schematische Seitenansicht bzw. Draufsicht der Hebeeinrichtung der Garagierungsvorrichtung,
Fig. 4 eine Draufsicht auf einen Rahmen der Hebeeinrichtung,
Fig. 5 eine Seitenansicht zu Fig. 4, und
Fig. 6 eine Seitenansicht einer Aufnahme.

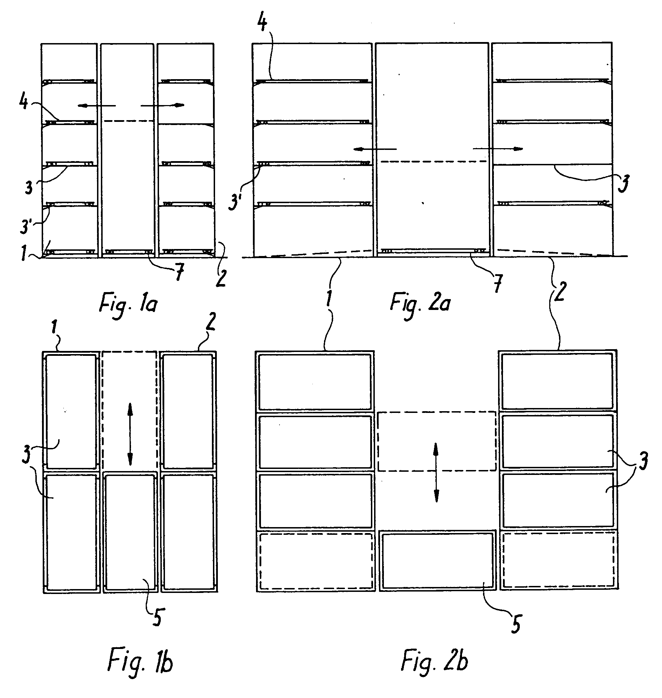

Die in den Fig. 1 und 2 dargestellte Garagierungsvorrichtungen weisen jeweils parallele Anordnungen von vertikalen Stellplatzreihen 1 bzw. 2 auf, die Stellplätze 3 zur Aufnahme je eines Kraftfahrzeuges enthalten. Die aus seitlichen Laufflächen, -schienen od.dgl. gebildeten Stellplätze 3 sind entweder über ihre Länge oder in der Einfahrrichtung am hinteren Ende 3' leicht nach unten geneigt.

Zum Anheben und Absenken von fahrbaren Aufnahmen 4 für je ein Kraftfahrzeug ist ein zwischen den Stellplatzreihen verfahrbarer Turm 5 vorgesehen, der gleiche Höhe wie die Stellplatzreihen hat und vertikale Führungs- und Kettenantriebseinrichtungen 6 für einen Heberahmen 7 aufweist, mit dem jeweils eine Aufnahme 4 auf die Höhe eines ausgewählten Stellplatzes 3 anhebbar bzw. von diesem absenkbar ist. Der Turm 5 ist an seiner Unterseite mit Rädern ausgestattet, mit denen er auf nicht gezeigten Schienen od.dgl. entlang der Stellplatzreihen verfahrbar ist.

Jeder Heberahmen 7 weist an zwei gegenüberliegenden Seiten zueinander parallele Laufflächen 8 für die Aufnahme 4 auf und ist beispielsweise an vier Umlaufketten 6' der Antriebseinrichtung 6 befestigt. Zwischen den Laufflächen 8 des Heberahmens 7 erstrecken sich horizontale Umlaufketten 10, die über Querwellen 11 und zugeordnete Antriebsmotoren 12 in Umlauf versetzbar sind. Die Umlaufketten 10 stehen je paarweise mit Kurbeln 13 in Antriebsverbindung, an denen Greifhaken 14 montiert sind. Mit Hilfe der Greifhaken 14, die über die gegenüberliegenden Seiten des Heberahmens 7 ausfahrbar sind, können die fahrbaren Aufnahmen 4 aus den Stellplätzen 3 auf die Laufflächen 8 des Heberahmens 7 gezogen werden. Die zwischen den Laufflächen 8 angeordneten Umlaufketten 10 sind ferner je mit zwei in gegenseitigem Abstand angeordneten Mitnehmerrollen 15 zum Verschieben der Aufnahme 4 vom Heberahmen 7 auf den jeweiligen Stellplatz 3 bzw. zum Verschieben der Aufnahme auf dem Heberahmen ausgestattet. Der gegenseitige Abstand der von den Ketten 10 abstehenden Mitnehmerrollen 15 ist so getroffen, daß der in der Überstellrichtung jeweils vordere Mitnehmer an der Vorderkante der Aufnahme 4 angreift und diese auf den Stellplatz 3 schiebt, wogegen der nachfolgende Mitnehmer an der Aufnahme 4 von hinten angreift und diese vollends auf den Stellplatz 3 schiebt, weil dieser auskragende Mitnehmer den Freiraum zwischen Turm 5 und Stellplatz 3 überbrückt.

Die Greifhaken 14 an den beiden gegenüberliegenden Heberahmenseiten werden unabhängig voneinander über eine Wechselkupplung 18 von den Umlaufketten 10 angetrieben, um eine gewünschte Aufnahme 4 aus dem Stellplatz 3 zu ziehen, so daß diese von den Mitnehmerrollen 15 der Umlaufketten 10 in den Turm 5 auf den Heberahmen 7 geschoben werden kann.

Auf den beiden Laufflächen 8 des Hebershmens 7 sind überdies Mulden 16 zur Aufnahme der Laufräder 17 der Aufnahme 4 vorgesehen, um diese auf dem Heberahmen zu arretieren. Der Heberahmen ist ferner mit einem Schmutz- und Schmelzwasserfänger ausgestattet.

Das präzise Positionieren des Turmes 5 und des Heberahmens 7 mit der jeweiligen Aufnahme 4 erfolgt mittels elektronischer Rechner, Näherungs- und Endschalter. Die Antriebsmotore werden von (nicht gezeigten) nicht zugänglichen Leitschienen mit Strom versorgt.

Es versteht sich, daß die erläuterten Ausführungsbeispiele im Rahmen des allgemeinen Erfindungsgedankens verschiedentlich abgewandelt werden können, insbesondere was die gegenseitige Anordnung und Detailausbildung der Stellplatzreihen und des die Hebeeinrichtung enthaltenden Turmes betrifft, der beispielsweise auch in oben hängender Anordnung verfahrbar sein kann, falls die erfindungsgemäße Vorrichtung z.B. für eine Tiefgarage Verwendung findet.

## Patentansprüche

1. Abstellvorrichtung für Lasten, insbesondere Garagierungsvorrichtung für Fahrzeuge, mit zumindest zwei vertikalen Reihen (1, 2) von übereinander angeordneten Stellplätzen (3) und mit einer verfahrbaren, turmartigen Einrichtung (5) zum Anheben und Absenken der Lasten zu bzw. von den Stellplätzen (3), wobei diese Einrichtung (5) einen höhenverstellbaren Heberahmen (7) mit auf gegenüberliegenden Seiten desselben angeordneten Laufflächen (8) zum Abstützen je einer fahrbaren Aufnahme (4) für eine Last aufweist und wobei zwischen den Laufflächen (8) des Heberahmens (7) endlos umlaufende Antriebseinrichtungen (10, 11, 12) zum Verfahren der Aufnahmen zwischen Stellplätzen und Heberahmen vorgesehen sind, wobei an den beiden anderen gegenüberliegenden Seiten des Heberahmens (7) mittels der Antriebseinrichtungen (10, 11, 12) ausfahrbare Greiforgane (14) zum Überführen der Aufnahmen (4) von den Stellplätzen auf den Heberahmen (7) vorgesehen sind und die Antriebseinrichtungen (10, 11, 12) mit innerhalb des Heberahmens (7) bewegbaren Mitnehmern (15) zum Überführen der Aufnahmen (4) vom Heberahmen (7) auf die Stellplätze (3) ausgestattet sind, dadurch gekennzeichnet, daß die Greiforgane (14) mittels Kurbeln (13) mit den endlos umlaufenden Antriebsvorrichtungen (10) in Verbindung stehen und daß mindestens zwei Mitnehmer (15) vorgesehen sind, wobei der gegenseitige Abstand der Mitnehmer (15) so getroffen ist, daß der in der Überstellrichtung jeweils vordere Mitnehmer an der Vorderkante der Aufnahme (4) angreift und diese auf den Stellplatz (3) schiebt, wogegen der nachfolgende Mitnehmer an der Aufnahme (4) von hinten angreift und diese vollends auf den Stellplatz (3) schiebt.

2. Vorrichtung nach Anspruch 1, dadurch gekennzeichnet, daß die Greiforgane als Greifhaken (14) ausgebildet sind und über die Kurbeln (13) mittels innerhalb des Heberahmens (7) umlaufender Antriebsketten (10) gegensinnig antreibbar sind.

3. Vorrichtung nach Anspruch 2, dadurch gekennzeichnet, daß die umlaufenden Antriebsketten (10) für die Greifhaken (14) zugleich die Mitnehmer tragen, die durch von den Ketten mit gegenseitigem Abstand abstehende Mitnehmerrollen (15) für die Aufnahmen (4) gebildet sind.

4. Vorrichtung nach einem der Ansprüche 1 bis 3, dadurch gekennzeichnet, daß die Laufflächen (8) des Heberahmens (7) Mulden (16) für die Räder (17) der fahrbaren Aufnahmen (4) aufweisen.

## Claims

1. Goods storage device, in particular car garaging device, comprising at least two vertical rows (1, 2) of parking spaces (3) arranged one above the other and a movable, tower-like means (5) for raising and lowering the goods to and from the parking spaces (3), this means (5) having a vertically adjustable lifting frame (7) with bearing surfaces (8) arranged on opposite sides thereof for supporting a movable receiver (4) for goods, and continuous driving means (10, 11, 12) for moving the receivers between the parking spaces and the lifting frame being provided between the bearing surfaces (8) of the lifting frame (7), gripper elements (14) which can be moved out by means of the driving means (10, 11, 12) for transferring the receivers (4) from the parking spaces to the lifting frame (7) being provided on the other two opposing sides of the lifting frame (7) and the driving means (10, 11, 12) being provided with dogs (15) movable within the lifting frame (7) for transferring the receivers (4) from the lifting frame (7) to the parking spaces (3), characterised in that the gripper elements (14) are connected via cranks (13) to the continuous driving means (10) and that at least two dogs (15) are provided, the mutual spacing of the dogs (15) being such that the front dog in the direction of storage engages the front edge of the receiver (4) and pushes it on to the parking space (3), while the subsequent dog engages the receiver (4) from the rear and pushes it completely on to the parking space (3).

2. Device according to claim 1, characterised in that the gripper elements are grab hooks (14) and can be driven in opposite directions via the cranks (13) by means of driving chains (10) rotating within the lifting frame (7).

3. Device according to claim 2, characterised in that the continuous driving chains (10) for the grab hooks (14) also carry the dogs which are formed by driving rollers (15) for the receivers (4) projecting at a mutual distance from the chains.

4. Device according to one of claims 1 to 3, characterised in that the bearing surfaces (8) of the lifting frame (7) have troughs (16) for the wheels (17) of the movable receivers (4).

## Revendications

1. Dispositif de stockage de charges, en particulier dispositif de garage pour véhicules avec au moins deux rangées verticales (1, 2) de places de stationnement (3) agencées en juxtaposition et avec un dispositif déplaçable en forme de tour (5) pour le levage et la descente des charges vers ou à partir des places de stationnement (3), ce dispositif (5) comportant un châssis de levage (7) réglable en hauteur avec des surfaces de roulement (8) agencées sur les côtés opposés de celui-ci pour supporter respectivement un logement mobile (4) pour une charge et entre les surfaces de roulement (8) du châssis de levage (7), des dispositifs d'entraînement circulaires sans fin (10, 11, 12) étant prévus pour le déplacement des logements entre les places de stationnement et le châssis de levage, sur les deux autres côtés en opposition du châssis de levage (7) des organes de préhension (14) sortables au moyen des dispositifs d'entraînement (10, 11, 12) étant prévus pour le transfert des logements (4) à partir des places de stationnement sur le châssis de levage (7) et les dispositifs d'entraînement (10, 11, 12) étant équipés d'organes d'entraînement mobiles (15) à l'intérieur du châssis de levage (7) pour le transfert des logements (4) à partir du châssis de levage (7) pour l'amenée sur les places de stationnement (3), caractérisé en ce que les organes de préhension (14) sont en communication au moyen de manivelles (13) avec les dispositifs d'entraînement circulaires sans fin (10) et en ce que sont prévus au moins deux éléments d'entraînement (15), la distance réciproque entre les éléments d'entraînement (15) étant telle que l'élément d'entraînement avance respectivement dans la position de transfert venant s'engager sur le bord avant du logement (4) et poussant celui-ci sur la place de stationnement (3), tandis que l'élément d'entraînement suivant vient s'engager sur le logement (4) par l'arrière et pousse celui-ci complètement sur la place de stationnement (3).

2. Dispositif selon la revendication 1, caractérisé en ce que les organes de préhension sont conçus sous forme de crochets de préhension (14) et peuvent être entraînés à l'aide de manivelles (13) au moyen des chaînes d'entraînement circulaires à l'intérieur du châssis de levage (7) en sens inverse.

3. Dispositif selon la revendication 2, caractérisé en ce que les chaînes d'entraînement circulaires (10) pour les crochets de préhension (14) supportent en même temps les éléments d'entraînement qui sont formés par les chaînes avec les rouleaux d'entraînement (15) séparés d'une certaine distance entre eux pour les logements (4).

4. Dispositif selon l'une des revendications 1 à 3, caractérisé en ce que les surfaces de roulement (8) du châssis de levage (7) comportent des dépressions (16) destinées aux roues (17) des logements mobiles (4).
